# EUROPÄISCHE PATENTSCHRIFT

(11) **EP 2 560 521 B1**
(45) Veröffentlichungstag und Bekanntmachung des Hinweises auf die Patenterteilung: **25.03.2015**
(21) Anmeldenummer: 11715487.2
(22) Anmeldetag: 14.04.2011
(51) Int. Cl.: A47B 88/04, F16F 1/362, F24C 15/16

(54) **DÄMPFUNGSSYSTEM FÜR BESCHLÄGE**
DAMPING SYSTEM FOR FITTINGS
SYSTÈME D'AMORTISSEMENT POUR FERRURES

(30) Priorität: 22.04.2010 DE 102010016592
(43) Veröffentlichungstag der Anmeldung: 27.02.2013
(73) Patentinhaber: Paul Hettich GmbH & Co. KG, 32278 Kirchlengern (DE)
(72) Erfinder: JÄHRLING, Peter, 32257 Bünde (DE)
(74) Vertreter: Dantz, Jan Henning
(86) Internationale Anmeldenummer: PCT/EP2011/055885
(87) Internationale Veröffentlichungsnummer: WO 2011/131550

(56) Entgegenhaltungen:
- DE-U1-202008 008 538
- US-A1- 2006 238 089
- Peter Stipp: "Strickware für heisse Einsätze", Antriebstechnik, 1. März 2010 (2010-03-01), Seiten 46-47, XP55005458, Gefunden im Internet: URL:http://awikom.de/download/ANT_201003_B uck_KTR.pdf [gefunden am 2011-08-23]

## Beschreibung

Die vorliegende Erfindung betrifft einen Beschlag, insbesondere für Haushaltsgeräte und Möbel, mit einem ersten Beschlagsteil, das relativ zu einem zweiten Beschlagsteil bewegbar ist, wobei ein Dämpfungselement mit einem Gehäuse und einem in dem Gehäuse bewegbar gelagerten Kolben vorgesehen ist, um die Relativbewegung des ersten Beschlagsteils zu dem zweiten Beschlagsteil vor Erreichen einer Endposition abzubremsen.

Es gibt Dämpfungssysteme für Beschläge, insbesondere Auszugsführungen, bei denen die Bewegung einer Laufschiene vor Erreichen einer Schließposition abgebremst wird. Meist werden hydraulische oder pneumatische Dämpfer eingesetzt, die durch Bewegung der Beschlagsteile relativ zueinander aktiviert werden. Solche hydraulischen oder pneumatischen Dämpfer sind allerdings nicht bei höheren Temperaturbereichen geeignet. Insbesondere ist ein Einsatz für Backöfen schwierig, denn die eingesetzten Dämpfungsöle oder die erforderlichen Elastomerdichtungen können nur bis zu einem bestimmten Temperaturbereich eingesetzt werden. Gerade bei hohen Temperaturbereichen werden daher keine Dämpfer eingesetzt, was zu lauten Anschlaggeräuschen führt und zudem den Verschleiß erhöht.

Die US 2006/0238089 offenbart eine Auszugsführung, die mit einem Dämpfungssystem ausgerüstet ist. Das Dämpfungssystem umfasst einen Kolbendämpfer, der über eine Kolbenstange mit einem verfahrbaren Mitnehmer verbunden ist, wobei der Mitnehmer eine Bewegung einer verfahrbaren Schiene abbremst.

Ein weiterer Beschlag miteinem Dämpfungssystem ist aus DE 102 005 028 673 bekannt.

Es ist daher Aufgabe der vorliegenden Erfindung, einen Beschlag zu schaffen, der auch bei hohen Temperaturen einsetzbar ist.

Diese Aufgabe wird mit einem Beschlag mit Dämpfungssystem mit den Merkmalen des Anspruches 1 gelöst.

Erfindungsgemäß ist in dem Gehäuse des Dämpfungselementes ein Gestrick aus Fäden angeordnet, das durch den Kolben für eine Dämpfung der Bewegung der Beschlagsteile komprimierbar ist. Durch Dämpfung der Bewegung der Beschlagsteile können dabei laute Anschlagsgeräusche vermieden werden und zudem wird der Verschleiß an den Beschlagsteilen vermindert. Das Gestrick wird komprimiert und kann dadurch vor Erreichen einer Endposition die Relativbewegung zwischen den Beschlagsteilen abbremsen. Das Gestrick kann dabei in der Materialbeschaffenheit der Fäden frei gewählt werden, so dass auch hochtemperaturbeständige Materialien zum Einsatz kommen können.

Gemäß einer bevorzugten Ausgestaltung der Erfindung ist das Gestrick aus metallischen Fäden gebildet. Beispielsweise kann das Gestrick aus, bevorzugt nichtrostender Stahlwolle bestehen, das auch bei hohen Temperaturen beständig ist. Die Temperaturbeständigkeit des Gestricks liegt vorzugsweise über 200° C, insbesondere über 500° C, so dass das Dämpfungssystem auch bei Backöfen mit Pyrolysereinigung eingesetzt werden kann.

Vorzugsweise sind das erste und das zweite Beschlagsteil als Schienen einer Auszugsführung ausgebildet. Das Gehäuse des Dämpfungselementes kann dabei an einer ersten Schiene der Auszugsführung festgelegt sein und der Kolben ist über einen Mitnehmer mit einer zweiten Schiene koppelbar. Dabei kann der Kolben linear geführt sein und der Mitnehmer ist an einer Kurvenführung verfahrbar gelagert, so dass der Mitnehmer zumindest für eine kurze Wegstrecke vor Erreichen der Endposition mit der Schiene gekoppelt ist. Die Kurvenführung kann dabei einen abgewinkelten Endabschnitt aufweisen, an dem der Mitnehmer verschwenkt wird, um die Schiene von dem Mitnehmer zu entkoppeln.

Für eine besonders kompakte Bauweise kann der Kolben auch integral mit einer Schiene der Auszugsführung ausgebildet sein. Der Kolben kann beispielsweise Bestandteil einer Mittelschiene sein, die zwischen einer Laufschiene und einer Führungsschiene angeordnet ist. Dann kann eine Stirnseite der Mittelschiene genutzt werden, um das Gestrick zu komprimieren. Das Gehäuse kann dann auch durch die Laufschiene und/oder die Führungsschiene gebildet sein. Dadurch kann in der Endposition das Dämpfungselement zwischen den Schienen von außen nicht sichtbar angeordnet werden.

Statt einer Auszugsführung können auch andere Beschläge mit einem erfindungsgemäßen Dämpfungssystem ausgestattet sein. Das erste und das zweite Beschlagsteil können beispielsweise als verschwenkbare Scharnierteile ausgebildet sein, aber auch ein Einsatz bei Schiebetüren oder anderen Beschlägen ist möglich.

Durch die Verwendung eines Gestricks können bei diesem Dämpfungselement keine Leckagen auftreten.

Die Erfindung wird nachfolgend anhand von zwei Ausführungsbeispielen mit Bezug auf die beigefügten Zeichnungen näher erläutert. Es zeigen:
- Figur 1: eine Seitenansicht einer Auszugsführung mit einem erfindungsgemäßen Beschlag mit einem Dämpfungssystem;
- Figur 2: eine perspektivische Ansicht der Auszugsführung der Figur 1;
- Figur 3: eine Seitenansicht der Auszugsführung der Figur 1 in einer Zwischenposition;
- Figur 4: eine perspektivische Ansicht der Auszugsführung der Figur 3;
- Figuren 5A und 5B: zwei Ansichten eines modifizierten Ausführungsbeispieles einer Auszugsführung mit einem Dämpfungssystem, und
- Figuren 6A und 6B: zwei Ansichten der Auszugsführung der Figuren 5 mit verfahrener Laufschiene.

Eine Auszugsführung 1 umfasst eine Führungsschiene 2, die beispielsweise an einer Seitenwand eines Haushaltsgerätes, wie einem Backofen, oder einem Möbelkorpus festlegbar ist. An der Führungsschiene 2 ist eine Mittelschiene 14 über Wälzkörper verfahrbar gelagert. Weiterhin ist an der Mittelschiene 14 eine Laufschiene 3 über Wälzkörper verfahrbar gelagert. Auszugsführungen können auch aus nur zwei oder auch aus mehr als zwei Schienen bestehen. Um eine Bewegung der Laufschiene 3 relativ zu der Mittelschiene 14 und der Führungsschiene 2 vor Erreichen einer Endposition abzubremsen, ist ein Dämpfungselement 4 vorgesehen.

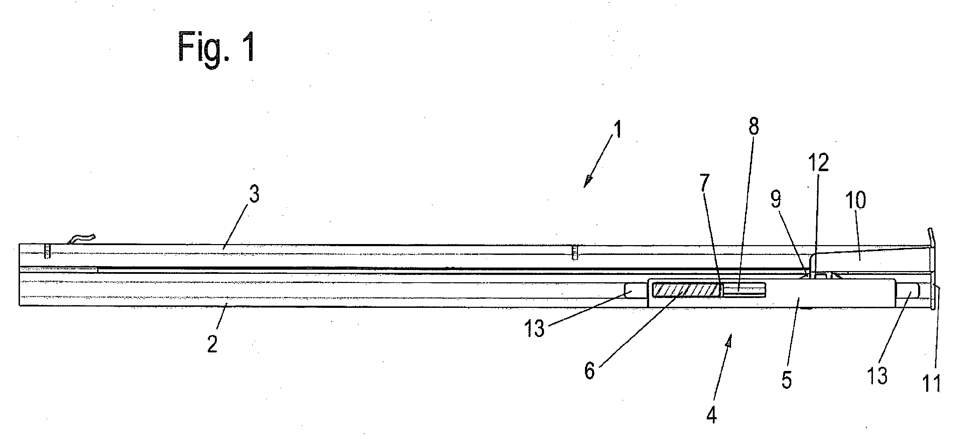

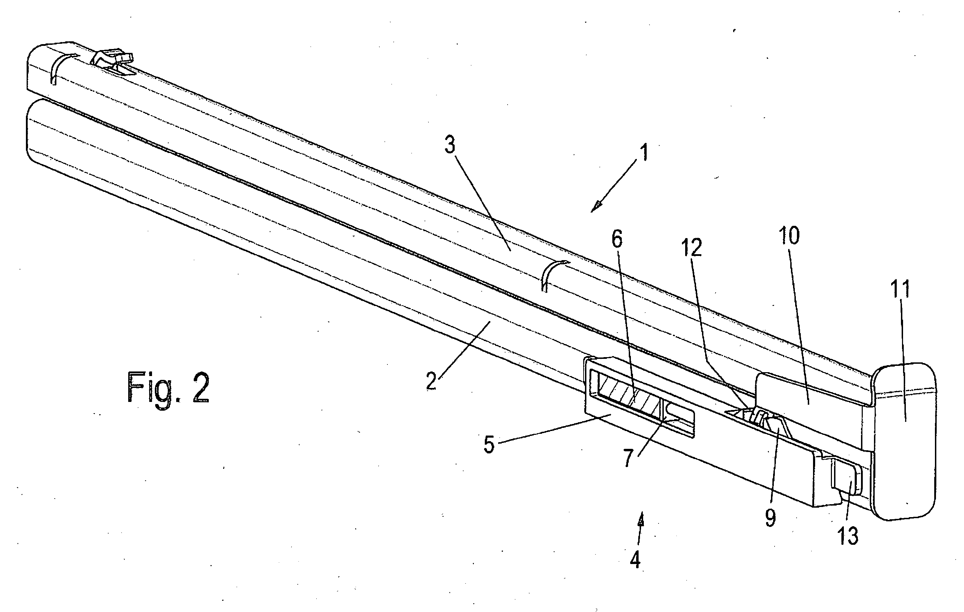

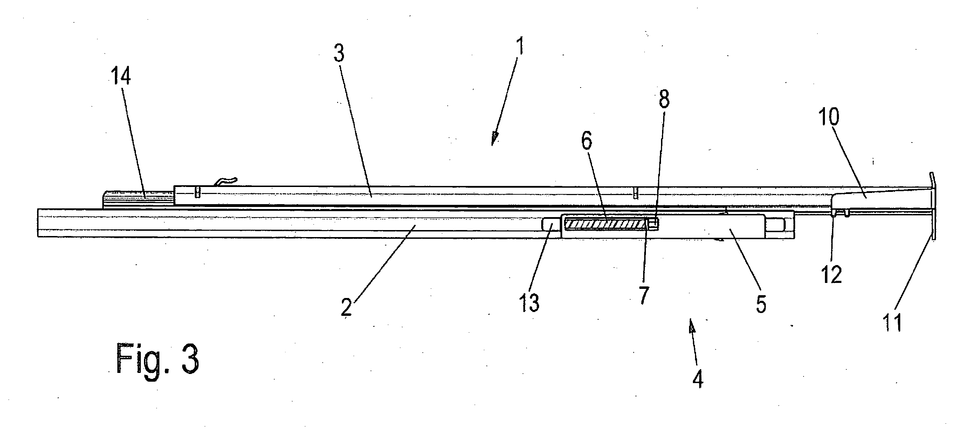

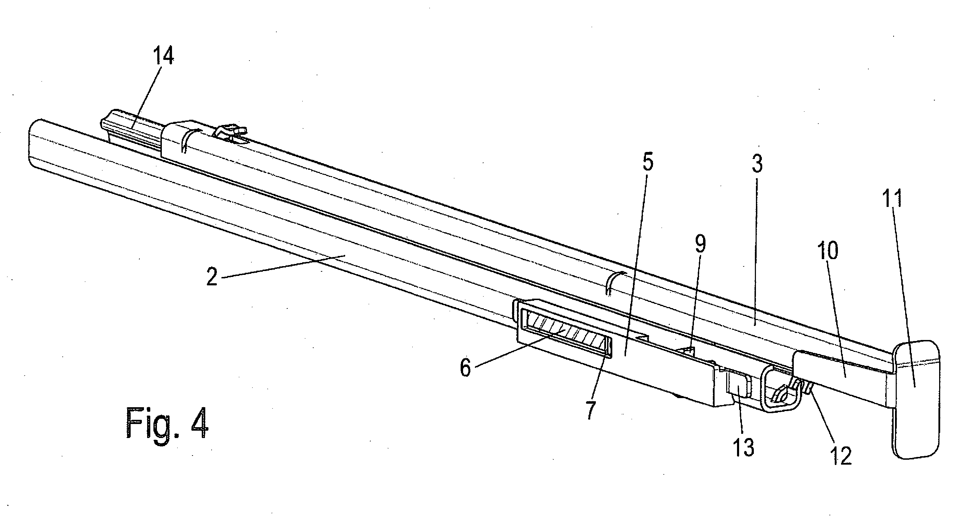

Das Dämpfungselement 4 umfasst ein Gehäuse 5, das über zwei seitliche Laschen 13 an der Führungsschiene 2 festgelegt ist. In dem Gehäuse 5 ist ein Gestrick 6 aus metallischen Fäden in Form vom Stahlwolle angeordnet, das über eine verschiebbar gelagerte Kolbenplatte 7 komprimierbar ist. Die Kolbenplatte 7 ist mit einer Kolbenstange 8 verbunden, die an einen Mitnehmer 9 gekoppelt ist. Der Mitnehmer 9 ist entlang einer Kurvenführung an dem Gehäuse 5 verfahrbar gelagert und kann von einer Endposition (Figuren 1 und 2) in eine leicht geöffnete Position der Laufschiene 3 verfahren werden. Am Ende der Kurvenführung ist ein abgewinkelter Endabschnitt vorgesehen, so dass der Mitnehmer 9 entlang der Kurvenführung verschwenkt wird und dadurch Stege 12 eines Aktivators 10 freigegeben werden. Der Aktivator 10 ist über eine Platte 11 an einer Stirnseite der Laufschiene 3 festgelegt. Die Laufschiene 3 kann dann weiter in Öffnungsrichtung bewegt werden und ist von dem Mitnehmer 9 abgekoppelt (Figuren 3 und 4). Bevorzugt ist der Mitnehmer 9 in Schließrichtung federbelastet um die Schließbewegung der Laufschiene 3 zu bewirken. Somit wird eine Selbsteinzugsvorrichtung mit dem erfindungsgemäßen Dämpfungselement versehen. Weiterhin bewirkt die Feder in Schließrichtung eine Zuhaltung im geschlossenen Zustand der Auszugsführung 1. Die Feder bewirkt, dass das Gestrick 6 zur Dämpfung im komprimierten Zustand verharrt, bis die Auszugsführung 1 in Öffnungsrichtung bewegt wird.

Das Gestrick 6 des Dämpfungselementes 4 besteht aus Stahlwolle und weist eine Temperaturbeständigkeit von über 500 °C auf, so dass das Dämpfungselement 4 auch für Backöfen mit Pyrolysereinigung eingesetzt werden kann. Das Gehäuse 5, die Kolbenstange 8 sowie die Kolbenplatte 7 können ebenfalls aus Stahlblech bestehen. Das Gestrick 6 dämpft eine Schließbewegung der Laufschiene, die in der Endposition zu lauten Anschlaggeräuschen führen könnte. Dabei wird bei der Schließbewegung über den Aktivator 10 der Mitnehmer 9 in Schließrichtung verfahren und die Kolbenplatte 7 komprimiert das Gestrick 6. Bei einer Bewegung in Öffnungsrichtung wird das Gestrick 6 wieder dekomprimiert.

Zur Verringerung der Oxidationsneigung der Stahlwolle kann diese aus nichtrostendem Stahl gefertigt, nitriert oder beschichtet werden. Zur Beschichtung eignen sich beispielsweise anorganisch-organische Hybridpolymere.

Das Gestrick kann im Sinne eine Vliesstoffes verarbeitet sein und eine amorphe Anordnung aufweisen. Alternativ kann das Gestrick eine geordnete Struktur im Sinne eines Gewebes oder Gewirkes aufweisen. Es ist auch eine Kombination denkbar, z.B. ein Mantel mit einer geordneten Struktur und eine Füllung mit amorpher Anordnung. Der Mantel kann beispielsweise wie ein Faltenbalg aufgebaut sein, um eine definierte Bewegung in Dämpfungsrichtung zu unterstützen. Weiterhin verringert sich die Schwankungsbreite der Dämpfungswirkung bei einem definierten Aufbau des Dämpfungselementes.

In den Figuren 1 bis 4 ist das Gehäuse 5 mit einer Aussparung gezeigt, damit das Gestrick 6 sichtbar ist. Selbstverständlich ist das Gehäuse 5 geschlossen ausgebildet und umgibt das Gestrick 6, damit dieses nicht durch eine Öffnung entweichen kann.

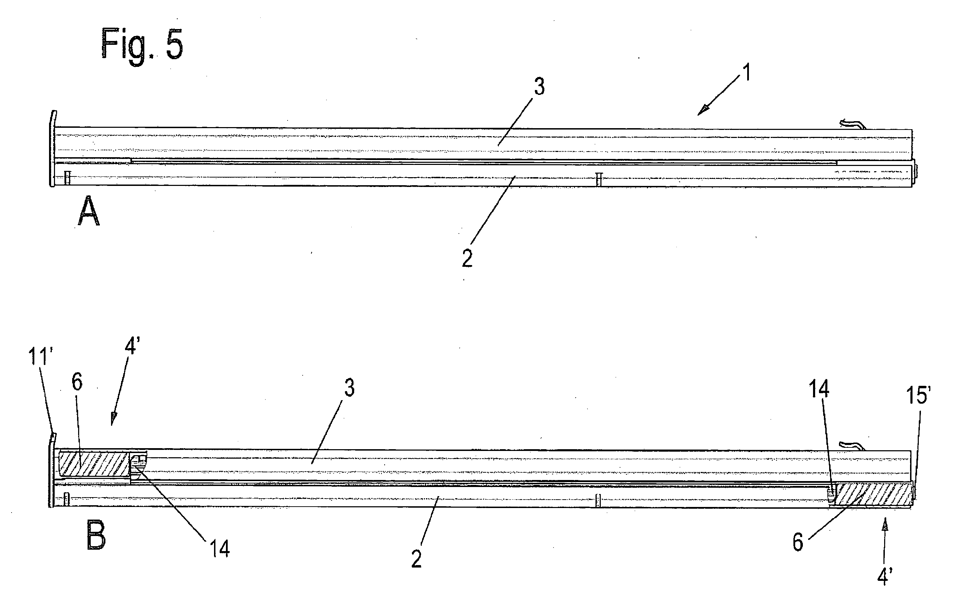

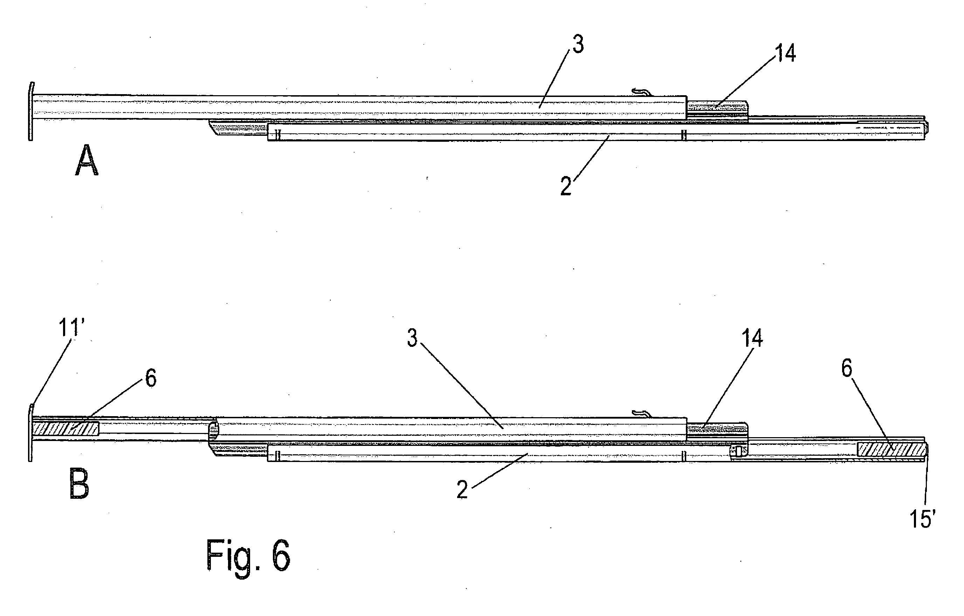

In den Figuren 5 und 6 ist eine modifizierte Ausführungsform einer Auszugsführung 1 mit einer Führungsschiene 2 und einer Laufschiene 3 gezeigt. Zwischen der Führungsschiene 2 und der Laufschiene 3 ist eine Mittelschiene 14 angeordnet, die in der Schließposition ein Gestrick 6 eines modifizierten Dämpfungselementes 4' komprimiert. Wie in der geschnittenen Darstellung der Figur 5B sichtbar ist, wird auf der linken Seite ein Gestrick 6 durch eine Stirnseite der Mittelschiene 14 beaufschlagt, wobei das Gestrick 6 des Dämpfungselementes 4' in einem Hohlraum der Führungsschiene 3 aufgenommen ist. Die Laufschiene 3 ist stirnseitig über eine Platte 11' verschlossen, so dass das Gestrick 6 nicht herausgedrückt werden kann.

Ferner ist an der Führungsschiene 2 ein weiteres Dämpfungselement 4' vorgesehen, das ein Gestrick 6 aus Fäden aufweist, das durch eine Stirnseite der Mittelschiene 14 komprimierbar ist und in einem Hohlraum der Laufschiene 2 angeordnet ist, der stirnseitig über einen Deckel 15' verschlossen ist.

Wird die Laufschiene 3 aus der Schließposition relativ zu der Führungsschiene 2 verfahren (Figuren 6A und 6B), kann das Gestrick 6 aus Fäden sich entspannen und entfaltet sich innerhalb des durch die Laufschiene 3 bzw. Führungsschiene 2 gebildeten Hohlraums. Die Mittelschiene 14 gelangt außer Eingriff mit dem Gestrick 6, so dass die Laufschiene 3 frei in Öffnungs- und Schließrichtung bewegt werden kann, bis kurz vor Erreichen der Endposition die Mittelschiene 14 an gegenüberliegenden Seiten in Kontakt mit einem Gestrick 6 gelangt und dadurch die Schließbewegung abgebremst wird.

In den gezeigten Ausführungsbeispielen wird das Dämpfungssystem bei einer Auszugsführung 1 eingesetzt. Es ist auch möglich, das Dämpfungssystem für Türen für Backöfen, Kühlschränke oder auch für Schiebetüren einzusetzen.

Das Gestrick 6 kann mit dem Gehäuse 5 oder einer Schiene der Auszugsführung 1 verbunden sein, beispielsweise über einen oder mehrere Schweißpunkte. Auch eine mechanische Festlegung des Gestricks 6 ist möglich, beispielsweise durch Klemmung. Die Fäden des Gestrick 6 können dabei auch als Fasern ausgebildet sein, die eine kürzere Länge besitzen, beispielsweise zwischen 1 cm und 5cm. Auch das Material der Fäden bzw. Fasern kann statt Metall auch aus Keramik oder Kohlenstoff umfassen oder aus anderen hitzebeständigen Materialien bestehen.

Das Gehäuse 5 kann ferner auch röhrenförmig als Hülse das Gestrick 5 umgeben.

### Bezugszeichenliste

- 1: Auszugsführung
- 2: Führungsschiene
- 3: Laufschiene
- 4: Dämpfungselement
- 4': Dämpfungselement
- 5: Gehäuse
- 6: Gestrick
- 7: Kolbenplatte
- 8: Kolbenstange
- 9: Mitnehmer
- 10: Aktivator
- 11: Platte
- 11': Platte
- 12: Steg
- 13: Laschen
- 14: Mittelschiene
- 15': Deckel

## Patentansprüche

1. Beschlag, insbesondere für Haushaltsgeräte und Möbel, mit einem ersten Beschlagsteil (2), das relativ zu einem zweiten Beschlagsteil (3) bewegbar ist, wobei ein Dämpfungselement (4, 4') vorgesehen ist, um die Relativbewegung des ersten Beschlagsteils (2) zu dem zweiten Beschlagsteil (3) vor Erreichen einer Endposition abzubremsen, **dadurch gekennzeichnet,** dass ein Gestrick (6) angeordnet ist, dass für eine Dämpfung der Bewegung der Beschlagsteile (2, 3) komprimierbar ist.

2. Beschlag nach Anspruch 1, **dadurch gekennzeichnet, dass** das Gestrick (6) aus metallischen Fäden gebildet ist.

3. Beschlag nach Anspruch 1 oder 2, **dadurch gekennzeichnet, dass** das Gestrick eine Temperaturbeständigkeit von über 200° C, insbesondere über 500° C, aufweist.

4. Beschlag nach Anspruch 1 bis 3, **dadurch gekennzeichnet, dass** das Gestrick (6) in einem Gehäuse (5) aufgenommen ist.

5. Beschlag nach Anspruch 4, **dadurch gekennzeichnet, dass** auf das Gestrick (6) im Gehäuse (5) ein beweglich gelagerter Kolben (7, 14) einwirkt.

6. Beschlag nach Anspruch 4 oder 5, **dadurch gekennzeichnet, dass** das erste und zweite Beschlagsteil (2, 3) als Schienen einer Auszugsführung (1) ausgebildet sind.

7. Beschlag nach Anspruch 6, **dadurch gekennzeichnet, dass** das Gehäuse (5) an einer ersten Schiene (2) der Auszugsführung (1) festgelegt ist und der Kolben (7) über einen Mitnehmer (9) mit der zweiten Schiene (3) koppelbar ist.

8. Beschlag nach Anspruch 7, **dadurch gekennzeichnet, dass** der Kolben (7) linear geführt ist und der Mitnehmer (9) an einer Kurvenführung verfahrbar gelagert ist.

9. Beschlag nach einem der Ansprüche 6 bis 8, **dadurch gekennzeichnet, dass** der Kolben (14) integral mit einer Schiene der Auszugsführung (1) ausgebildet ist.

10. Beschlag nach einem der Ansprüche 6 bis 9, **dadurch gekennzeichnet, dass** in der Endposition das Dämpfungselement (4') zwischen den Schienen (2, 3) von außen nicht sichtbar angeordnet ist.

11. Beschlag nach einem der Ansprüche 1 bis 10, **dadurch gekennzeichnet, dass** das erste und zweite Beschlagsteil als verschwenkbare Scharnierteile ausgebildet sind.

## Claims

1. Fitting, in particular for domestic appliances and furniture, comprising a first fitting part (2) that can be moved relative to a second fitting part (3), wherein a damping element (4, 4') is provided in order to slow down the relative movement of the first fitting part (2) to the second fitting part (3) before an end position is reached, **characterized in that a** knitted fabric (6) is arranged that is capable of being compressed for the purpose of damping the movement of the fitting parts (2, 3).

2. Fitting according to Claim 1, **characterized in that** the knitted fabric (6) is formed from metallic threads.

3. Fitting according to Claim 1 or 2, **characterized in that** the knitted fabric (6) has a temperature resistance of over 200° C, in particular over 500°.

4. Fitting according to Claims 1 to 3, **characterized in that** the knitted fabric (6) is accommodated in a housing.

5. Fitting according to Claim 4, **characterized in that a** movably supported piston (7, 14) acts on the knitted fabric (6) within the housing (5).

6. Fitting according to one of Claims 4 or 5, **characterized in that** the first fitting part and the second fitting part (2, 3) are formed as rails of a pull-out guide (1).

7. Fitting according to Claim 6, **characterized in that** the housing (5) is fixed to a first rail (2) of the pull-out guide (1) and the piston (7) can be coupled via a driver (9) with the second rail (3).

8. Fitting according to Claim 7, **characterized in that** the piston (7) is linearly guided and the driver (9) is movably supported at a curve guide.

9. Fitting according to any one of Claims 6 to 8, **characterized in that** the piston (14) is formed integral with a rail of the pull-out guide (1).

10. Fitting according to any one of Claims 6 to 9, **characterized in that** the damping element (4') arranged between the rails (2, 3) is not visible from the outside when in the end position.

11. Fitting according to any one of Claims 1 to 10, **characterized in that** the first fitting part and the second fitting part are designed as pivotable hinge parts.

## Revendications

1. Ferrure, en particulier pour appareils domestiques et meubles comprenant une première partie de ferrure (2) qui est mobile par rapport à une seconde partie de ferrure (3), un élément d'amortissement (4, 4') étant prévu pour permettre de freiner le mouvement relatif de la première partie de ferrure (2) par rapport à la seconde partie de ferrure (3) avant d'avoir atteint une position d'extrémité,
**caractérisée en ce qu'**
il est prévu un élément tricoté (6) pouvant être comprimé pour amortir le mouvement des parties de ferrure (2, 3).

2. Ferrure conforme à la revendication 1,
**caractérisée en ce que**
l'élément tricoté (6) est formé de fibres métalliques.

3. Ferrure conforme à la revendication 1 ou 2,
**caractérisée en ce que**
l'élément tricoté présente une résistance à une température supérieure à 200°C, en particulier supérieure à 500°C.

4. Ferrure conforme à la revendication 1 à 3,
**caractérisée en ce que**
l'élément tricoté (6) est logé dans un boitier (5).

5. Ferrure conforme à la revendication 4,
**caractérisée en ce qu'**
un piston (7, 14) logé mobile dans le boitier (5) agit sur l'élément tricoté (6).

6. Ferrure conforme à la revendication 4 ou 5,
**caractérisée en ce que**
la première partie de ferrure (2) et la seconde partie de ferrure (3) sont réalisées sous la forme de rails d'un guidage de déploiement (1).

7. Ferrure conforme à la revendication 6,
**caractérisée en ce que**
le boitier (5) est fixé sur un premier rail (2) du guidage de déploiement (1) et le piston (7) peut être accouplé au second rail (3) par l'intermédiaire d'un élément d'entrainement (9).

8. Ferrure conforme à la revendication 7,
**caractérisée en ce que**
le piston (7) est guidé linéairement et l'élément d'entrainement (9) peut être déplacé sur un guidage curviligne.

9. Ferrure conforme à l'une des revendications 6 à 8,
**caractérisée en ce que**
le piston (14) est réalisé intégralement avec un rail du guidage de déploiement (1).

10. Ferrure conforme à l'une des revendications 6 à 9,
**caractérisée en ce que**
dans la position d'extrémité, l'élément d'amortissement (4') n'est pas visible de l'extérieur entre les rails (2, 3).

11. Ferrure conforme à l'une des revendications 1 à 10,
**caractérisée en ce que**
la première partie de ferrure et la seconde partie de ferrure sont réalisées sous la forme de parties de charnière pivotantes.
